# EUROPEAN PATENT APPLICATION

(11) **EP 1 267 585 A2**
(43) Date of publication of application: **18.12.2002**
(21) Application number: 01850195.7
(22) Date of filing: 09.11.2001
(51) Int. Cl.: H04Q 7/36

(54) **Pooling resources**

(30) Priority: 13.06.2001 SE 0102096
(71) Applicant: A Brand New World in Sweden AB, 164 28 Kista (SE)
(72) Inventor: Zetterberg, Per, 16576 Hässelby (SE)
(74) Representative: Hasselgren, Erik Joakim

(57) **Abstract**

The present invention relates to allocating resources in a cellular radio telecommunication system comprising a group of hardware resources. The group of hardware resources comprises hardware resources allocated to a first cell and hardware resources allocated to at least a second cell. A group of spectrum resources comprising spectrum resources allocated to said first and at least second cells, and where both of said cells belongs to the same site. The invention comprises detecting a request for resources from said first sector, allocating a first hardware resource from said group of hardware resources, allocating a first spectrum resource from said group of spectrum resources, marking said first hardware resource and first spectrum resource as occupied, and coupling said first hardware resource for communication with a terminal in said first sector using said first spectrum resource.

## Description

### TECHNICAL FIELD

The present invention relates generally to a method and a system for radio communication and more specifically to a method and a system employing sectorization of a communication network cell.

### BACKGROUND OF THE INVENTION

Modern radio communication systems, such as GSM, W-CDMA, CDMA2000 and many others, employ the concept of cells. A cell is conceptually an area wherein all terminals are connected to the same base-station. The base-station is said to cover the cell.

As the number of subscribers increase in the cellular networks, the cells stand the risk of being congested. This is due to the fact that in a specific cell, interference constraints dictate that only a limited number of subscribers may communicate with the base station at any given moment. If the expected amount of subscribers in a specific cell is too large the cell has to be divided in two, or more, cells. Thus, elaborate cell planning is required to cover the land area. In rural areas few sites are necessary to cover wide areas, whereas in densely populated areas, such as inner cities, a relative large amount of sites are required to be able to cope with the massive amount of subscribers.

A telecommunication operator will naturally keep the amount of sites down, since each individual site require installation, cabling, maintenance etc.

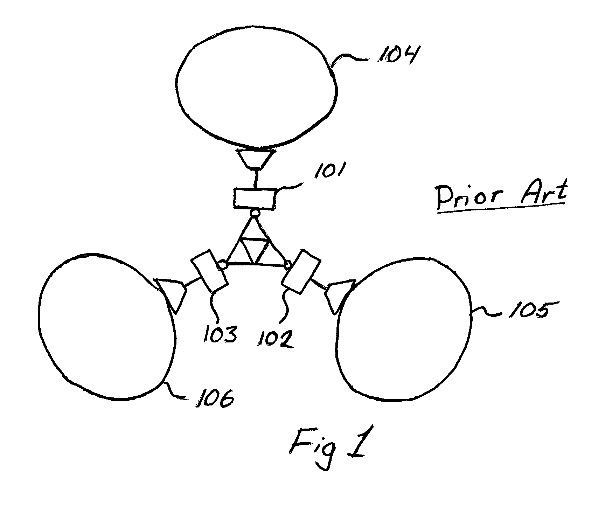

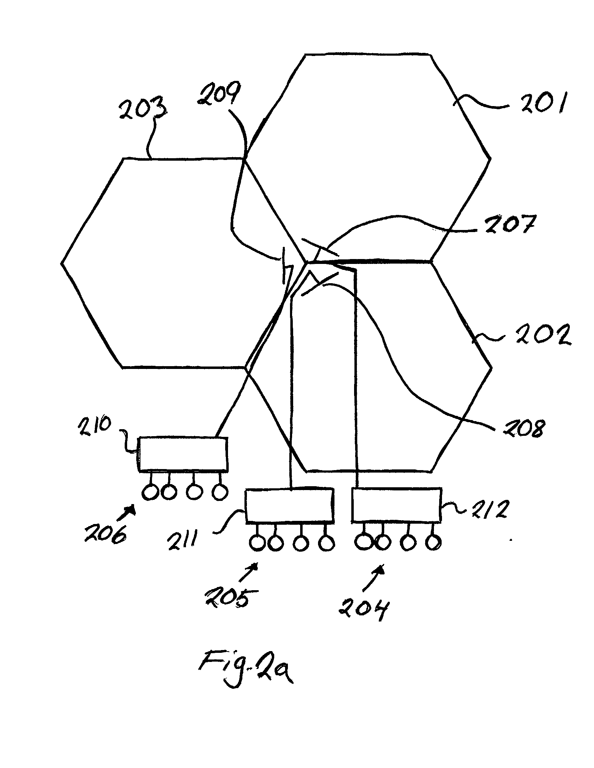

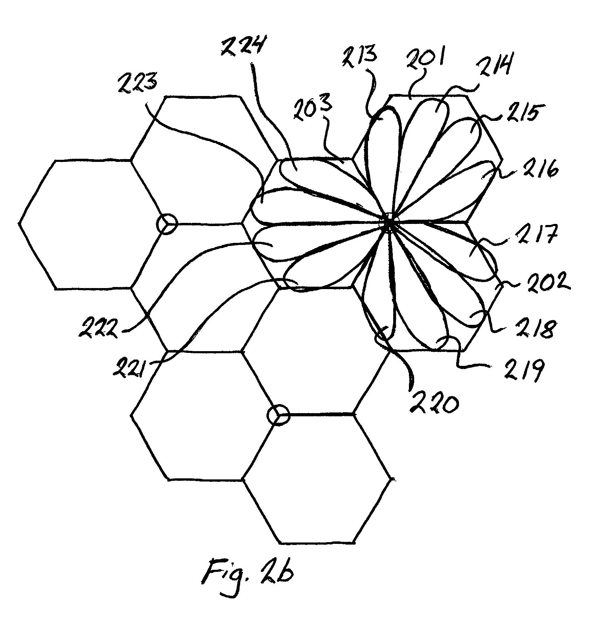

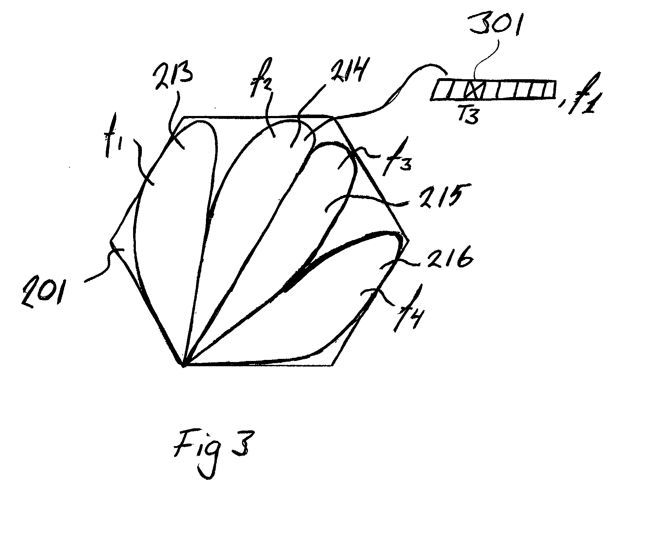

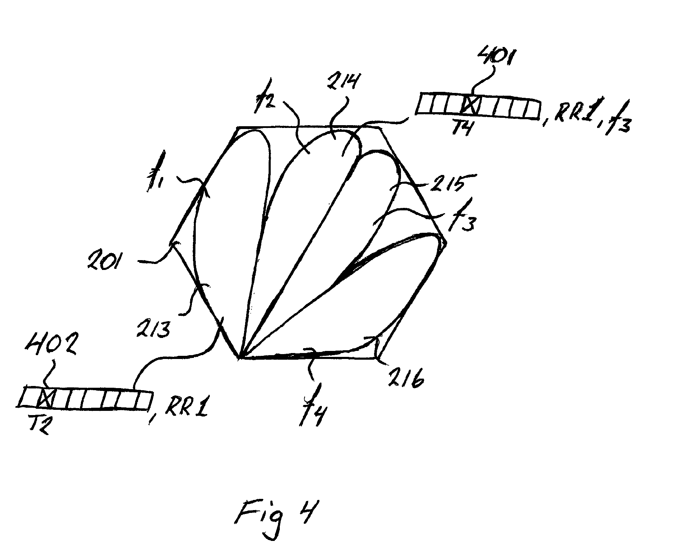

Thus, the operator put up several base-stations, often two or three, on the same site and connect the base-stations to antennas with beams covering different angular segments, as illustrated in Fig. 1, wherein three Base Transceiver Stations are shown. This is known as sectorization. In this way a cell has been divided into three different sectors or cells and therefore more subscribers can be handled in the same area without any further sites being employed.

Traditionally each base-station is assigned an amount of spectrum resources, e.g. frequency channels, timeslots, and hardware resources, such as transceivers. The base-station then allocates user resources independently of the activity in other base-stations.

Sectorization improves the efficiency of radio-communication systems by focusing the radiated energy and thereby increasing the signal to interference ratio in the system. However, these advantages are accompanied by the problem of reduced trunking efficiency. When the number of subscribers previously handled by one cell now is divided into several cells, each served by its own base station, the number of hardware and spectrum resources per subscriber is increased. I.e., when the available resources are divided into many small pools, the occupancy has to be reduced to avoid excessive blocking (i.e. the probability of not being able to assign a channel or hardware resource), thus more hardware and spectrum resources need to be introduced. This is of course expensive for the operator. As a result a suitable number of sectors in a traditional site is usually only two or three.

Therefore it exists a need to better utilize resources when employing sectorization.

### SUMMARY OF THE INVENTION

It is a main object of the present invention to provide such apparatus and method, which share hardware and spectrum resources between at least two different cells or sectors.

These objects among others are, according to a first aspect of the present invention, attained by a method of allocating resources in a cellular radio telecommunication system comprising a group of hardware resources. The group of hardware resources comprises hardware resources allocated to a first cell and shared by at least a second cell. A group of spectrum resources comprising spectrum resources allocated to said first and at least second cells, and where said first and second cells belongs to the same site.
The method comprises the steps of:
- detecting a request for resources from said first cell,
- allocating a hardware resource from said group of hardware resources,
- allocating a spectrum resource from said group of spectrum resources,
- marking said hardware resource and spectrum resource as occupied,
- coupling said hardware resource for communication with a terminal in said first sector using said first spectrum resource, and
- releasing said resources when said request terminates.

The term hardware resource as well as spectrum resource, as used herein, shall be construed as indivisible entities. Thus in a system comprising time slots, a spectrum resource is a specific frequency and a specific time slot, and a hardware resource is a specific transceiver and a specific time slot, i.e. the same transceiver used during another time slot is regarded as a separate hardware resource.

These objects among others are, according to a second aspect of the present invention, attained by a device for allocating resources in a cellular radio telecommunication system comprising a group of hardware resources, said group of hardware resources comprises hardware resources allocated to a first cell and at least a second cell. A group of spectrum resources comprising spectrum resources allocated to said first and at least second cells, and where both of said cells belongs to the same site. The device comprises means for allocating a first hardware resource from said group of hardware resources, and means for allocating a first spectrum resource from said group of spectrum resources. The device further comprises means for marking said first hardware resource and first spectrum resource as occupied, and switching means for coupling said first hardware resource for communication with a terminal in said first sector using said first spectrum resource.

An advantage of the present invention is that better utilization of available resources is achieved while maintaining the advantages of many sectors in terms of reduced interference and increased antenna gain.

Further characteristics of the invention and advantages thereof will be evident from the following detailed description of embodiments of the invention.

### BRIEF DESCRIPTION OF THE DRAWINGS

The present invention will become more fully understood from the detailed description of embodiments of the present invention given herein below and the accompanying Figs. 1 to 5, which are given by way of illustration only, and thus are not limitative of the present invention.

Figure 1 schematically shows a prior art arrangement.

Figures 2a and 2b schematically show a site having sectorized cells according to a preferred embodiment of the invention.

Figure 3 shows a schematic representation of a cell in figures 2a and 2b according to a preferred embodiment of the invention.

Figure 4 shows a schematic representation of a cell in figures 2a and 2b according to another preferred embodiment of the invention.

Figure 5 shows a schematic diagram of a switch network according to a preferred embodiment of the invention.

### PREFERRED EMBODIMENTS

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known methods and apparatuses are omitted so as not to obscure the description of the present invention with unnecessary details.

Figure 1 shows a prior art arrangement where three base stations 101-103 is connected to three respective antennas 104-106. Each base station and antenna combination covers a 120° wide sector, thus dividing the cell into three sectors, each sector being in fact its own cell serviced by its own base station. The arrangement in figure 1 is installed on a single site.

Frequency resources allocated to an omni-directional site having only one base station will have to be divided into three different pools one for each sector. Thus it is clear that fewer subscribers can be handled in each sector. Also more hardware needs to be installed, due to reduced trunking efficiency.

Our co-pending application filed at the same date as the present application, by the same inventor, and having the title "Active Sectorization", hereby included by reference, describes means for effectively using narrow sectors when further sectorization is needed.

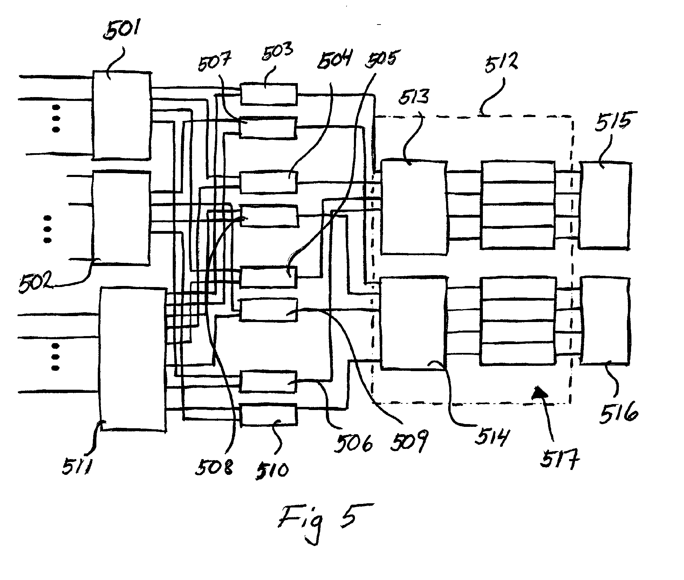

Figures 2a and 2b schematically show an arrangement according to a preferred embodiment of the invention for dividing each of the three 120° sectors, 201, 202 and 203 into four 30° sectors, where three groups 204, 205 and 206 of four base stations are connected to each antenna arrangement, 207, 208 and 209, through respective beam formers 210, 211 and 212. Each of the twelve base stations thus handles the communication in one of the twelve sector cells denoted 213-224 in figure 2b. Figure 2b shows the sector layout in a network cell plan.

Traditionally, the spectrum resources, e.g. the available frequencies would be divided between the twelve sector cells. Thus, if a three-sector cell would have four frequencies available in each cell, there would be only one frequency available for each 30° sector cell. According to a preferred embodiment of the invention, however, the spectrum resources are shared, which will be further described with reference to figure 3.

Figure 3 schematically shows sector cell 201 in figures 2a and 2b in greater detail according to a preferred embodiment of the invention. In sector cell 201 four frequencies are available, namely f₁, f₂, f₃ and f₄. These are primarily assigned to a specific 30° sector. Thus f₁ is assigned to sector 213, f₂ to sector 214, f₃ to sector 215 and f₄ to sector 216. However, if a sector is congested it may "borrow" resources from any of the other sectors provided that there is free available resources in that sector. In this particular example, sector 214 is congested and, since time slot T3 for frequency f₁ 301 is free in sector 213, and there is no risk of immediate congestion in sector 213, time slot T3 for frequency f₁ 301 is used in sector 214. Thus, a spectrum resource pooling is achieved, where a specific spectrum resource, in this case time slot T3 for frequency f₁, is shared between sector cells. This is possible, since the time slot T3 is not used by its ordinary user (in this case sector cell 213), and thus may be utilized by the sector cell having use for it.

Figure 4 schematically shows sector cell 201 in figures 2a and 2b in greater detail according to another preferred embodiment of the invention. In this embodiment, sector cell 214 is congested and "borrows" time slot T4 with frequency f₄ 401 from sector cell 216. Moreover, the radio means RR1 used, that is the transmitter and receiver, are means primarily assigned to sector cell 213. Since this radio means RR1 is used only in time slot T2 with frequency f₁ 402 it is free to be used by sector cell 214 at time slot T4 with frequency f₃. The radio means RR1 thus comprise, in this particular example, of two hardware resources, namely one hardware resource comprising of RR1 used in time slot T2 and a second hardware resource comprising RR1 used in time slot T4. The hardware resource may be configurable to be used with any frequency, e.g. RR1 may serve time slot T2 for frequency f₁ and time slot T2 for frequency f₂, however not simultaneously. Thus, both hardware resources and spectrum resources are shared between sector cells.

It should be clear for the skilled man in the art that, even though only examples have been given here where, clarity reasons, resources have been primarily assigned to a specific sector cell for that this is by no means necessary. Indeed, the resources may not necessarily be assigned to any specific sector, but may instead be placed in a common pool of resources, where each sector may request needed resources.

To be able to achieve hardware pooling a switch network need to be employed. Figure 5 schematically shows a switching network for pooling hardware resources. Receiver resources (not shown) are connected to a first 501 and a second 502 RX switch. The first RX switch 501 is connected to first, second, third and fourth duplex filter multiplexer 503, 504, 505 and 506, respectively. The second RX switch 502 is connected to fifth, sixth, seventh and eights duplex filter multiplexer 507, 508, 509 and 510, respectively. The duplex filter multiplexers are arranged to separate received and transmitted signals and direct received signals to the respective switch handling the selected receiver (not shown), and direct transmitted signals from a transmitter (not shown) via a transmitter switch 511, connected to each duplex filter multiplexer, to the near antenna equipment 512.

Thus, the duplex filter multiplexers 503 - 510 are connected to first and second beam formers 513 and 514, arranged to form the narrow antenna beams. In this respect the co-pending application, "Access Point Smart Antenna" by the same inventor as the present invention et al. assigned to A Brand New World in Sweden, and filed at the Swedish patent office, included herein by reference, describes a novel antenna arrangement suitable for forming narrow antenna beams. Each of the beam formers 513 and 514 are connected to antenna arrays 515 and 516 through antenna near boxes commonly denoted 517.

It will be obvious that the invention may be varied in a plurality of ways. For instance the invention may be applied in GSM, DECT or CDMA. Moreover, even though only pooling within one 120° sector has been described, it is obvious to the skilled man that spectrum and hardware resources may be pooled also in a 360° cell, or in any cell configuration where the resources are located at one single site. Further more, even though indivisible hardware and spectrum resources have been describe in relation with time slots, it is obvious for the skilled man that parts of time slots could be used as indivisible units.

Generally each of all available time slots for all available frequencies in all cells in one site can be regarded as one spectrum resource, when the telecommunication system employs time slots. However, this means that some combinations are undesirable, for instance allocating the same time slot for the same frequency to neighbouring cells. To avoid this an invalidating function may be implemented, comprising a function or database over undesirable combinations of spectrum or hardware resource allocation, which is thus not allowed.

Such variations are not to be regarded as a departure from the scope of the invention. All such modifications as would be obvious to one skilled in the art are intended to be included within the scope of the appended claims.

## Claims

1. A method of allocating resources in a cellular radio telecommunication system comprising a group of hardware resources, said group of hardware resources comprises hardware resources allocated to a first cell and at least a second cell, and a group of spectrum resources, said group of spectrum resources comprises spectrum resources allocated to said first and at least second cells, said first and second cells belongs to the same site,
**characterised by** the steps of:
- detecting a request for resources from said first cell,
- allocating a first free hardware resource from said group of hardware resources,
- allocating a first free spectrum resource from said group of spectrum resources,
- marking said first hardware resource and first spectrum resource as occupied for said first cell,
- coupling said first hardware resource for communication with a terminal in said first sector using said first spectrum resource, and
- releasing said resources when said request terminates.

2. The method according to claim 1, wherein each of said cells is neighbouring sectors.

3. The method according to claim 1, wherein said first and at least a second hardware resource are implemented by a single physical hardware, e.g. a transceiver.

4. The method according to claim 1, wherein said first hardware resource is configurable to be used with said first spectrum resource having a first frequency, and at least a second spectrum resource having a second frequency.

5. The method according to claim 1, wherein said spectrum resources, being the set of all combinations of carrier frequency, time slot and cells in said site.

6. The method according to claim 1, further comprising the step of invalidating specific combination of spectrum resources and/or hardware resources, e.g. using the same frequency and time slot for neighbouring cells.

7. The method according to claim 3, wherein said physical hardware are transceivers.

8. The method according to claim 1, wherein said spectrum resources are specific frequency carriers.

9. The method according to claim 1, wherein said spectrum recourses are specific time slots in specific frequency carriers.

10. A system for allocating resources in a cellular radio telecommunication system comprising a group of hardware resources, said group of hardware resources comprises hardware resources allocated to a first cell and at least a second cell, and a group of spectrum resources, said group of spectrum resources comprises spectrum resources allocated to said first and at least second cells, said first and second cells belongs to the same site,
**characterised in**,
- means for allocating a first hardware resource from said group of hardware resources,
- means for allocating a first spectrum resource from said group of spectrum resources,
- means for marking said first hardware resource and first spectrum resource as occupied,
- switching means for coupling said first hardware resource for communication with a terminal in said first sector using said first spectrum resource.

11. The system according to claim 10, wherein said hardware recourses are transceivers.

12. The system according to claim 10, wherein said hardware resources are transceivers in specific time slots.

13. The system according to claim 10, wherein said spectrum resources are specific frequency carriers.

14. The system according to claim 10, wherein said spectrum recourses are specific time slots in specific frequency carriers.

15. A method of allocating resources in a cellular radio telecommunication system comprising a group of hardware means, said group of hardware means comprises hardware means allocated to a first cell and at least a second cell, and a group of spectrum means, said group of spectrum means comprises spectrum means allocated to said first and at least second cells, said first and second cells belongs to the same site,
**characterised by** the steps of:
- detecting a request for resources from said first cell,
- allocating a first free hardware means from said group of hardware means,
- allocating a first free spectrum means from said group of spectrum means,
- marking said first hardware means and first spectrum means as occupied for said first cell,
- coupling said first hardware means for communication with a terminal in said first sector using said first spectrum means, and
- releasing said spectrum means and hardware means when said request terminates.

16. The method according to claim 15, wherein each of said cells is neighbouring sectors.

17. The method according to claim 15, comprising the further step of allocating said first hardware means, marked as occupied for said first spectrum means, for use with a second spectrum means in said second cell.

18. The method according to claim 15, comprising the further step of allocation said first spectrum means, marked as occupied with said first hardware means, for use with a second hardware means in said second cell.

19. The method according to claim 15, wherein said hardware means are transceivers.

20. The method according to claim 15, wherein said hardware means comprises a multitude of hardware resources, where each hardware resource is constituted by a transceiver used in a specific time slot.

21. The method according to claim 15, wherein said spectrum means comprises a set of spectrum resources, where each spectrum resource is combination of a carrier frequency, a time slot and a cell in said site.

22. The method according to claim 20, further comprising the step of invalidating specific combination of spectrum resources and/or hardware resources, e.g. using the same frequency and time slot for neighbouring cells.

23. The method according to claim 21, wherein said spectrum recourses are specific time slots in specific frequency carriers.
